Europäisches Patentamt

European Patent Office

Office européen des brevets

(19)

(11) Veröffentlichungsnummer: **0 226 867 B1**

(12) **EUROPÄISCHE PATENTSCHRIFT**

(45) Veröffentlichungstag der Patentschrift: **08.04.92**

(51) Int. Cl.5: **B01L 3/02**, G01N 35/06

(21) Anmeldenummer: **86116519.9**

(22) Anmeldetag: **27.11.86**

(54) **Pipette und Pipettiervorrichtung.**

(30) Priorität: **17.12.85 CH 5394/85**

(43) Veröffentlichungstag der Anmeldung:
**01.07.87 Patentblatt 87/27**

(45) Bekanntmachung des Hinweises auf die
Patenterteilung:
**08.04.92 Patentblatt 92/15**

(84) Benannte Vertragsstaaten:
**AT BE CH DE ES FR GB GR IT LI NL SE**

(56) Entgegenhaltungen:
EP-A- 0 072 558        EP-A- 0 077 180
EP-A- 0 078 724        FR-A- 2 383 704
US-A- 4 228 831        US-A- 4 478 094

(73) Patentinhaber: **Hamilton Bonaduz AG**
**Vicrusch**
**CH-7402 Bonaduz(CH)**

(72) Erfinder: **Arpagaus, Renato**
**Vogelsangweg 2**
**CH-7000 Chur(CH)**
Erfinder: **Leyssens, Herwig**
**Ouaderstrasse**
**CH-7015 Tamins(CH)**
Erfinder: **Hardmeier, Bruno**
**Rigastrasse 20**
**CH-7000 Chur(CH)**

(74) Vertreter: **Blum, Rudolf Emil Ernst et al**
**c/o E. Blum & Co Patentanwälte Vorderberg**
**11**
**CH-8044 Zürich(CH)**

EP 0 226 867 B1

Rank Xerox (UK) Business Services

# Beschreibung

Die vorliegende Erfindung betrifft eine Pipette mit einem Pipettenkörper und einem Pipettenkolben, eine Aufnahmeeinrichtung mit Pipette sowie eine Pipettenvorrichtung mit Aufnahmeeinrichtung.

Pipetten sind in vielen Ausführungen bekannt und weisen im wesentlichen einen Pipettenkörper und einen Pipettenkolben auf. Die Pipetten sind entweder manuell bedienbar oder werden in Pipettiervorrichtungen montiert.

Es sind Pipettiervorrichtungen bekannt, bei denen eine oder eine bestimmte Anzahl von Spitzen, die einen vorbestimmten Abstand zueinander aufweisen, zum Pipettieren verwendet werden. Die Spitze bzw. Spitzen sind an einem Arm oder ähnlichem montiert und können zwischen zwei Orten hin- und herverschoben werden, wobei der Abstand zwischen den Spitzen nicht verändert werden. Die zu pipettierende Lösung wird durch eine Peristaltikpumpe ausgetragen. Diese Vorrichtungen können die Spitzen einzeln aufnehmen oder es werden sogenannte Rechen mit einer bestimmten Anzahl von. Hand montiert.

Da der Abstand zwischen den Spitzen beim Pipettieren erhalten bleibt, müssten die zu pipettierenden Proben in dem gleichen Raster zu den Reaktionsgefässen angeordnet sein.

Ziel der Erfindung ist es, eine Pipette mit einem Pipettenkörper und einem Pipettenkolben zu schaffen, die als Einweg-Pipette in einem automatischen Pipettiervorgang anwendbar ist.

Die erfindungsgemässe Pipette hat die Vorteile, dass die Aufnahmeabschnitte Teile einer Steckkupplung darstellen, wodurch eine automatische Aufnahme durch eine Aufnahmeeinrichtung ermöglicht wird, und dass jede Pipette als Flüssigkeitsdetektor verwendbar ist, weil mindestens ein Teil der Pipette elektrisch leitend ist. Bei einem bevorzugten Ausführungsbeispiel ist im Uebergangsbereich zwischen Ansaugspitze und Hohlkörper innerhalb des Körpers eine ringförmige Erweiterung und angrenzend an die Ansaugspitze des Kolbens eine flanschartige Dichtungslippe ausgebildet, die unterhalb der Erweiterung liegt und den Kolben im Körper hält. Als insbesondere vorteilhaft erweist sich, dass einerseits die Ansaugspitze der Pipette bei der Herstellung der Pipette verschliessbar ist und erst bei Gebrauch geöffnet wird und andererseits die Zuordnung der Aufnahmeabschnitte bei den Pipetten gleich bleibt, wodurch die automatische Aufnahme erleichtert ist.

Eine Aufnahmeeinrichtung ist erfindungsgemäss durch die kennzeichnenden Merkmale des Patentanspruches 5 gekennzeichnet. Die Vorteile der Einrichtung sind darin zu sehen, dass der Pipettenkörper und der Pipettenkolben durch die erste und zweite Anordnung einzeln automatisch erfassbar und abwerfbar und relativ zueinander verschiebbar sind.

Bei einem bevorzugten Ausführungsbeispiel der Aufnahmeeinrichtung sind die erste und zweite Anordnung als äussere und innere Spannzange mit einer Spannhülse und einem Spannorgan ausgebildet, um den Pipettenkörper und Pipettenkolben aufzunehmen und dass die innere Spannzange in der äusseren Spannzange verschiebbar angeordnet ist und dass Mittel vorgesehen sind, die bei Spannzangen an den Pipettenkolben anlegbar sind, um beim Aufnehmen der Pipette den Pipettenkörper gegen einen Anschlag und den Pipettenkolben in die vorderste Stellung zu drücken und beim Auswerfen der Pipette den Pipettenkolben zusammen mit dem Pipettenkörper auf die Aufnahmeeinrichtung zu stossen.

Eine Pipettiervorrichtung ist erfindungsgemäss durch die Merkmale im kennzeichnenden Teil des Patentanspruches 11 gekennzeichnet.

Die Vorteile dieser Vorrichtung sind im wesentlichen darin zu sehen, dass

- die Pipetten selektiv und automatisch aufnehmbar sind,
- die Probenbehälter individuell angehoben werden,
- aus den Probebehältern direkt in eine Anordnung mit Gefässen pipettiert werden kann, die in einem regelmässigen Muster angeordnet sind, z.B. Micro-Titerplatten,
- die Pipetten nach dem Pipettieren abgestossen werden und
- der Pipettiervorgang wesentlich verkürzt wird.

Im folgenden wird die Erfindung anhand der beiliegenden Zeichnung näher erläutert.

Es zeigen:

Figur 1 eine teilweise aufgebrochen dargestellte Ansicht eines Ausführungsbeispiels einer erfindungsgemässen Pipette,

Figuren 2a bis 2d ein Ausführungsbeispiel einer erfindungsgemässen Aufnahmeeinrichtung für eine Pipette nach Figur 1 in vier Arbeitsstellungen im Längsschnitt,

Figur 3 ein bevorzugtes Ausführungsbeispiel einer erfindungsgemässen Pipette im Längsschnitt,

Figur 4 einen Schnitt durch die Ansaugspitze der Pipette,

Figuren 5a und 5b eine innere und äussere Spannzange eines demontiert dargestellten weiteren Ausführungsbeispiels einer erfindungsgemässen Aufnahmeeinrichtung für eine Pipette nach Figur 3 im Längsschnitt,

Figuren 6a bis 6d die Aufnahmeeinrichtung nach Figur 5 in vier Arbeitsstellungen in räumlicher Darstellung,

Figur 7 eine räumliche Ansicht eines Ausführungsbeispiels einer erfindungsgemässen Pipettiervorrichtung,

Figur 8 einen Ausschnitt der Darstellung in Figur 7 im grösseren Massstab,

Figur 9 eine Seitenansicht eines Teiles einer Dosiereinrichtung, und

Figur 10 eine Ansicht der Dosiereinrichtung in Richtung des Pfeiles B in Figur 9.

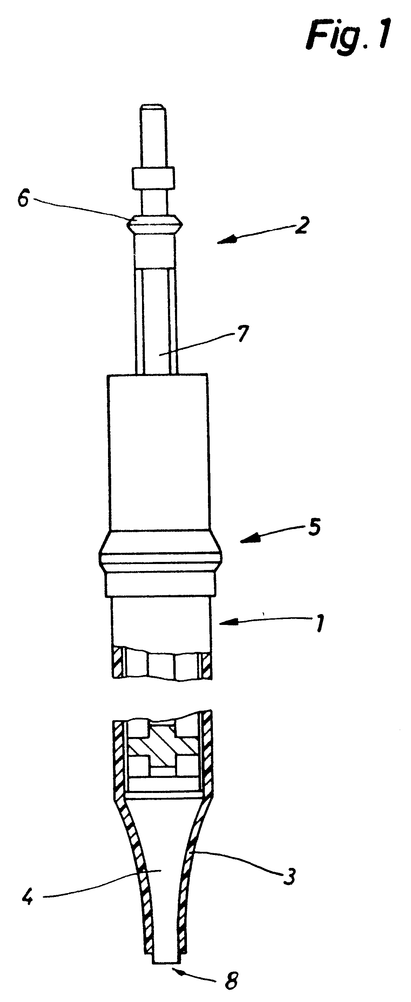

Die Pipette nach Figur 1 besteht aus einem Pipettenkörper 1 und einem Pipettenkolben 2. Der Pipettenkörper 1 besteht aus Kunststoff, der Pipettenkolben 2 besteht aus elektrisch leitend gemachtem Kunststoff. Der Pipettenkörper 1 ist rohrförmig und hat einen als Ansaugspitze dienenden Endabschnitt 3. Der Pipettenkolben 2 hat einen im wesentlichen konischen Endabschnitt 4, dessen Kontur dem Endabschnitt 3 des Pipettenkörpers 1 angepasst ist, so dass der Körper 1 und der Kolben 2 im Bereich der Ansaugspitze 3 eine totvolumenfreie Einheit bilden. Der Endabschnitt 4 des Kolbens 2 ist so ausgebildet, dass ein Abschnitt 8 aus dem Körper 1 hervorsteht, wenn der Kolben 2 vollständig in den Körper 1 eingeschoben ist.

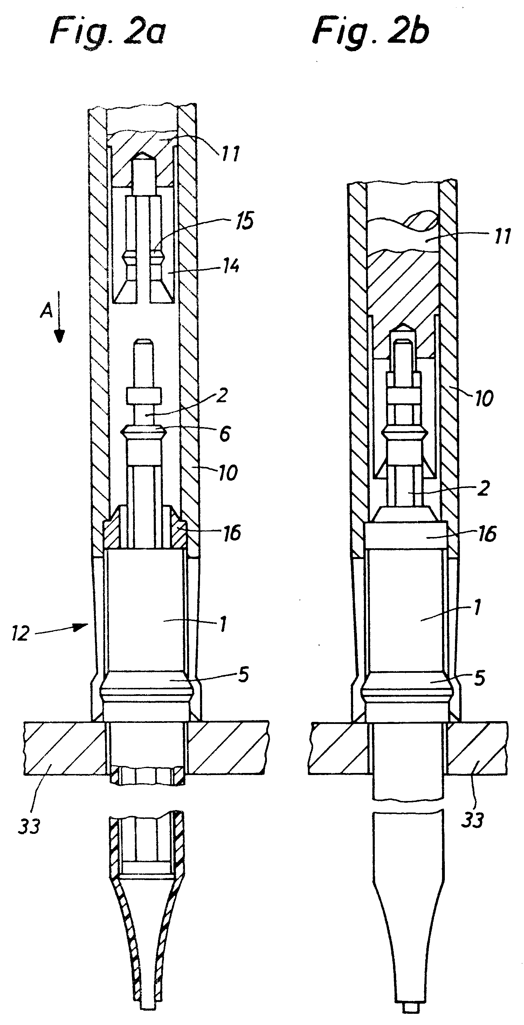

Der Körper 1 weist einen ringförmigen Abschnitt 5 auf, der am Umfang des Körpers 1 ausgebildet ist. Der Kolben 2 weist einen ringförmigen Abschnitt 6 auf, der am anderen Endabschnitt des Kolbens 2 ausgebildet ist. Diese ringförmigen Abschnitte 5,6 bilden Teile von Steckkupplungen, wie in Zusammenhang mit Figuren 2a bis 2d erläutert werden wird. Der Schaft 7 des Kolbens 2 hat eine kreuzförmige Querschnittsform und verjüngt sich ausgehend vom konischen Endabschnitt 3. Der Schaft 7 kann auch eine andere Querschnittsform aufweisen.

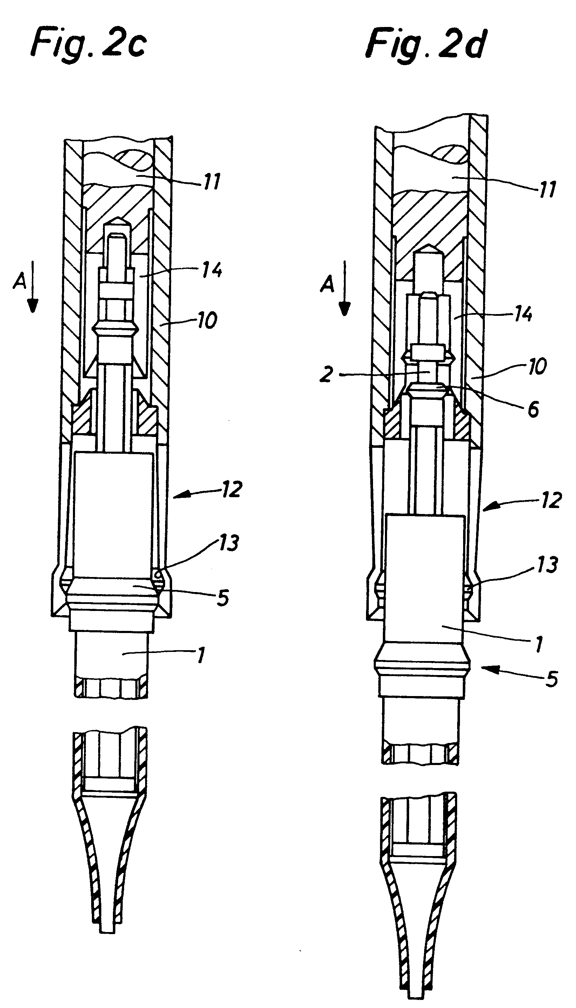

In den Figuren 2a bis 2d ist ein Ausführungsbeispiel einer Aufnahmeeinrichtung für die Pipette gemäss Figur 1 in vier Stellungen dargestellt, und zwar mit aufgenommenem Pipettenkörper 1 (Figur 2a), mit aufgenommenem Pipettenkolben 2 (Figur 2b), mit teilweise abgestossenem Pipettenkörper (Figur 2c) und mit teilweise abgestossenem Pipettenkolben (Figur 2d).

Wie die Figuren zeigen, weist die Aufnahmeeinrichtung einen ersten Greifer 10, der rohrförmig ist, und einen zweiten Greifer 11 auf, der stabförmig und im ersten Greifer 10 angeordnet ist. Der erste Greifer 10 hat einen geschlitzten Endabschnitt 12. Dieser Endabschnitt 12 ist innen mit einer ringförmigen Ausnehmung 13 (Figuren 2e und 2d) versehen, deren Kontur dem ringförmigen Abschnitt 5 am Umfang des Pipettenkörpers 1 angepasst ist. Der zweite Greifer 11 weist ebenfalls einen geschlitzten Endabschnitt 14 auf und hat eine ringförmige Ausnehmung 15 (Figur 2a), deren Kontur dem ringförmigen Abschnitt 6 am anderen Endabschnitt des Kolbens 2 angepasst ist. Im ersten Greifer 10 ist eine Spreizhülse 16 angeordnet. Der erste und zweite Greifer 10,11 weisen am anderen Ende Mittel auf, um diese in einer Pipettiervorrichtung zu montieren.

Der erste und zweite Greifer 10,11 bestehen aus Metall und sind durch nicht dargestellte Mittel gegeneinander isoliert. Der Pipettenkolben 2 und der zweite Greifer 11 bilden einen elektrischen Leiter.

Die Aufnahmeeinrichtung arbeitet wie folgt:

Die in Figur 1 dargestellten Pipetten sind in einem Schlitten 33 gehalten, der später beschrieben wird. Durch Verschieben des ersten Greifers 10 in Richtung des Pfeiles A wird dessen Endabschnitt 12 über den Pipettenkörper 1 geschoben, bis der ringförmige Abschnitt 5 am Pipettenkörper in die ringförmige Ausnehmung 13 im Endabschnitt 12 eingreift. Somit bilden der Endabschnitt 12 und der ringförmige Abschnitt 5 am Umfang des Pipettenkörpers 1 Teile einer Steckkupplung. Nachdem der Pipettenkörper 1 durch den ersten Greifer 10 erfasst worden ist, wird durch Verschieben des zweiten Greifers 11 in Richtung des Pfeiles A der Pipettenkolben 2 erfasst. Dieser Vorgang ist beendet, wenn der ringförmige Abschnitt 6 am Pipettenkolben 2 mit der ringförmigen Ausnehmung 15 des zweiten Greifers 11 in Eingriff ist. Aehnlich wie beim ersten Greifer 10 bilden den Endabschnitt 14 und der ringförmige Abschnitt 6 am Pipettenkolben 2 Teile einer Steckkupplung. Ist die Pipette durch den ersten und zweiten Greifer 10,11 erfasst worden, kann mit der Pipette ein Pipettiervorgang durchgeführt werden. Nach dem Pipettiervorgang wird die Pipette abgestossen. Wie Figur 2c zeigt, wird zuerst der Pipettenkörper 1 aus dem ersten Greifer 10 ausgestossen, indem der zweite Greifer 11 in Richtung des Pfeiles A verschoben und der erste Greifer 10 in Stellung gehalten wird.

Durch weiteres Verschieben des zweiten Greifers 11 in Richtung des Pfeiles A wird der geschlitzte Endabschnitt 14 des Greifers 11 gegen die Spreizhülse 16 gedrückt und dabei gespreizt. Durch diese Spreizung wird der Pipettenkolben 2 freigegeben, so dass die Pipette aus der Aufnahmeeinrichtung herausfällt.

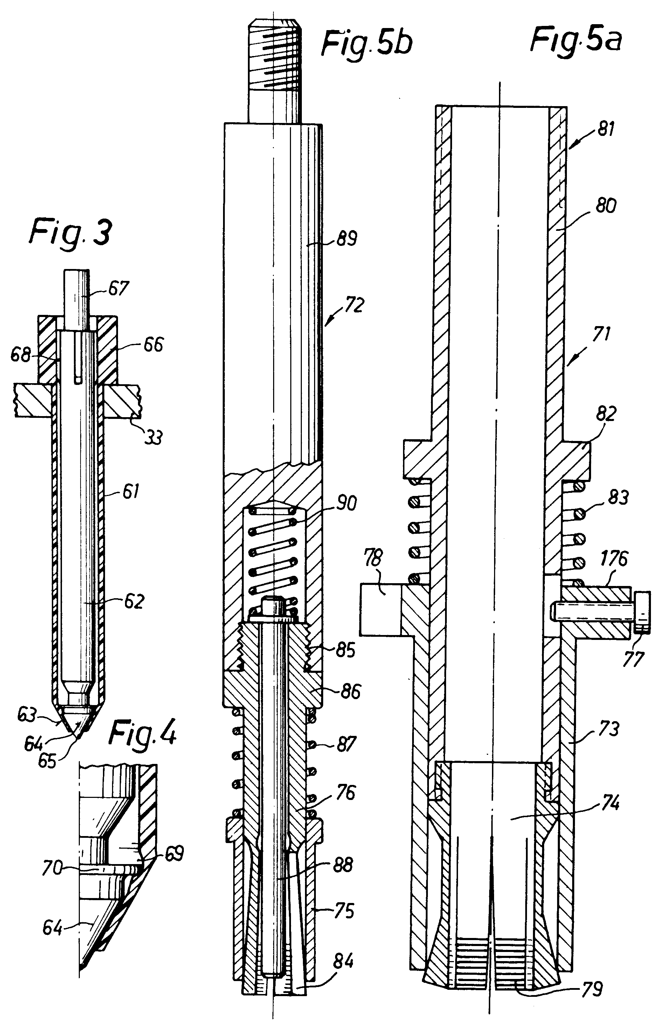

Die in den Figuren 3 und 4 dargestellte Pipette besteht auch aus einem Pipettenkörper 61 und einem Pipettenkolben 62. Der Pipettenkörper 61 besteht aus Kunststoff und der Pipettenkolben 62 besteht aus elektrisch leitendem Kunststoff. Es ist von Vorteil, wenn der Pipettenkolben 61 aus Polypropylen und der Pipettenkolben 62 aus Polyäthylen mit Graphitzusatz hergestellt ist. Der Pipettenkörper ist rohrförmig ausgebildet und hat einen als Ansaugspitze ausgebildeten Endabschnitt 63. Der Pipettenkolben 62 ist stabförmig ausgebildet und hat einen Endabschnitt 64, dessen Kontur dem Innenraum des Endabschnittes 63 des Pipettenkörpers 61 angepasst ist, so dass der Körper 61 und der Kolben 62 im Bereich der Ansaugspitze 63 eine totvolumenfreie Einheit bilden. Der Endabschnitt 64 des Kolbens 62 ist ferner so ausgebildet, dass ein Abschnitt 65 aus dem Körper 61 hervorsteht, wenn der Kolben 62 vollständig in den Körper 61 eingeschoben ist. Der Körper 61 weist an seinem anderen Ende einen einen Aufnahmeabschnitt bildenden Endabschnitt 66 auf, der am Umfang des Körpers 61 ausgebildet und mit einer Rändelung versehen ist. Der andere Endabschnitt 67 des Kolbens 62 ist zylinderförmig ausgebildet. Angrenzend an den Endabschnitt sind vier radial abstehende Abschnitte 68 ausgebildet, um den Kolben 62 am Körper 61 zu zentrieren.

Der die Ansaugspitze bildende Endabschnitt 63 des Körpers 61 weist eine geringere Wandstärke als der daran angrenzende rohrförmige Abschnitt des Körpers 61 auf. Durch eine entsprechende Auslegung kann der Schwindvorgang in vorteilhafter Weise so beeinflusst werden, dass im Uebergangsbereich zwischen Endabschnitt 63 und rohrförmigen Körper 61 im Körper eine Erweiterung 69 geschaffen wird. Am Kolben 62 ist angrenzend an den die Ansaugspitze bildenden Endabschnitt 64 eine flanschartige Dichtungslippe 70 ausgebildet, die innerhalb der Erweiterung 69 im Körper 61 liegt, wenn der Kolben 62 die vorderste Stellung im Körper 61 einnimmt.

Der ringförmige Abschnitt 66 und der zylinderförmige Endabschnitt 67 des Kolbens 62 bilden Aufnahmeabschnitte wie im Zusammenhang mit den Figuren 5a und b erläutert wird.

In den Figuren 5a und 5b ist ein bevorzugtes Ausführungsbeispiel einer Aufnahmeeinrichtung für die vorstehend beschriebene Pipette dargestellt. Die Aufnahmeeinrichtung weist eine äussere Spannzange 71 und eine innere Spannzange 72 auf, die der besseren Darstellung wegen in separaten Figuren 5a bzw. 5b dargestellt sind. Die in Figur 5b gezeigte innere Spannzange 72 ist innerhalb der äusseren Spannzange 71 angeordnet. Die äussere und innere Spannzange 71, 72 weisen jeweils eine Spannhülse 73,75 und ein Spannorgan 74,76 auf. Die Spannhülse 73 der äusseren Spannzange 71 ist rohrförmig ausgebildet und hat an einem Ende einen Ansatz 76 mit einer Schraube 77 zum Anschliessen einer elektrischen Leitung (nicht dargestellt) und einer Ausnehmung 78, um ein Verdrehen der Aufnahmeeinrichtung in der Pipettiervorrichtung zu verhindern. Das Spannorgan 74 der äusseren Spannzange 71 ist rohrförmig und an einem Ende mit einem Klemmabschnitt 79 versehen, der mit der Spannhülse 73 zusammenwirkt, um die innere Spannzange 72 festzuklemmen. Das Spannorgan 74 ist am anderen Ende in ein Ende eines Verlängerungsrohres 80 eingeschraubt. Am anderen Ende hat das Verlängerungsrohr 80 einen mit einem Aussengewinde versehenen Abschnitt 81. Das Verlängerungsrohr 80 hat ferner einen ringförmigen Ansatz 82, der am Umfang und im Abstand von dem einen Ende ausgebildet ist. Das Spannungsorgan 74 und das Verlängerungsrohr 80 sind innerhalb der Spannhülse 73 so angeordnet, dass das Verlängerungsrohr 80 aus dem mit dem Ansatz 76 versehenen Ende herausragt. Zwischen dem Ansatz 76 der Spannhülse 73 und dem Ansatz 82 am Verlängerungsrohr 80 ist auf dem Verlängerungsrohr eine Druckfeder 83 angeordnet, die das Spannorgan 74 in die Spannhülse 73 hineinzieht.

Die innere Spannzange 72 ist ähnlich ausgebildet wie die äussere Spannzange 71. In der Spannhülse 75 ist das Spannorgan 76 angeordnet. Das Spannorgan 76 weist an einem Ende einen Klemmabschnitt 84 und am anderen Ende einen mit Aussengewinde versehenen Abschnitt 85 auf. Ferner ist am Umfang des Spannorgans 76 nahe am Gewindeabschnitt 85 eine Wulst 86 ausgebildet. Zwischen dem Ende der Spannhülse 75 und der Wulst 86 ist auf dem Spannorgan 76 eine Druckfeder 87 angeordnet, die das Spannorgan 76 in die Spannhülse 75 hineinzieht. Innerhalb des Spannorgans 76 ist ein Auswerferstift 88 angeordnet, der bei geöffneter Spannzange 72 in das Spannorgan 76 verschiebbar ist. Auf dem Gewindeabschnitt 85 des Spannorgans 76 ist ein Verlängerungsrohr 89 aufgeschraubt, um die Spannzange 72 mit der Pipettiervorrichtung verbinden zu können. Innerhalb des Verbindungsrohres 89 ist eine weitere Druckfeder 90 angeordnet, die den Auswerferstift 88 in Richtung zur Greiferpartie der Spannzange 72 vorspannt.

Die äussere und innere Spannzange 71,72 bestehen aus Metall und können durch nicht gezeigte Mittel gegeneinander elektrisch isoliert sein. Der Pipettenkolben und die innere Spannzange bilden einen elektrischen Leiter.

Die vorstehend beschriebene Aufnahmeeinrichtung funktioniert folgendermassen:

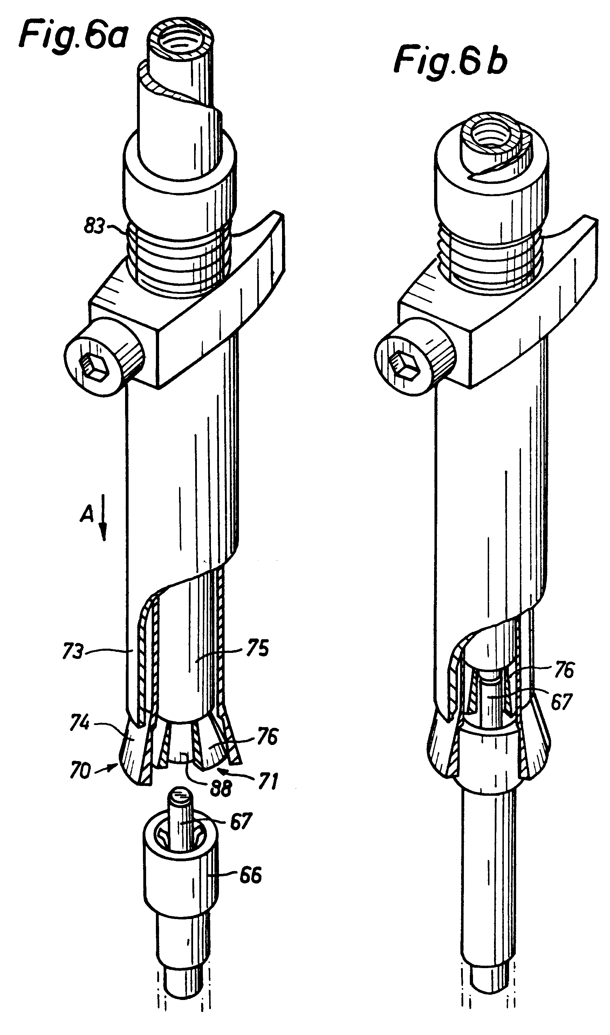

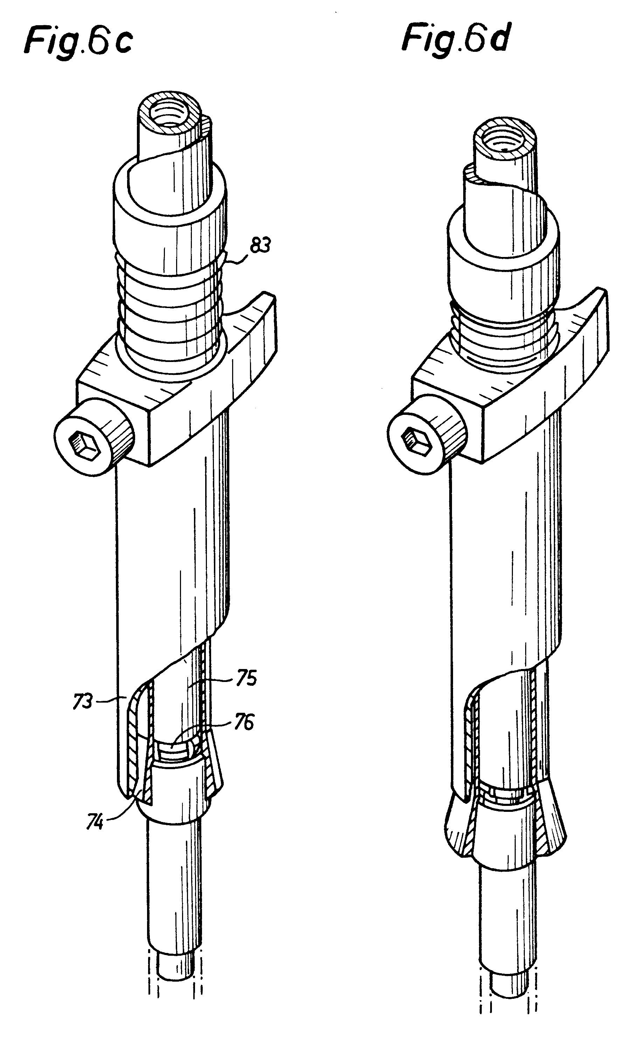

In einem später beschriebenen Schlitten 33 sind Pipetten in der in Figur 3 dargestellten Ausführung gehalten. Die Aufnahmeeinrichtung mit geöffneten Spannzangen 71,72 (Figur 6a) wird in Richtung des Pfeiles A zur Pipette hin verschoben. Die Spannzangen 71,72 werden dadurch geöffnet, dass das Spannorgan 74,76 gegen die Kraft der Druckfeder aus ihrer Spannhülse 73,75 herausgeschoben werden. Sind die Spannzangen 71,72 geöffnet, kann der Auswerferstift 88 gegen die Kraft der Druckfeder verschoben werden. Beim Verschieben der Aufnahmeeinrichtung stösst der Auswerferstift auf die Stirnfläche des Endabschnittes 66 des Pipettenkolbens und drückt mit der Kraft der Druckfeder den Pipettenkolben in die vorderste Stellung im Pipettenkörper 61 und den Pipettenkörper 61 gegen den Schlitten 33. Dadurch wird erreicht, dass in der Ansaugspitze kein Totvolumen vorhanden ist und die Pipette zur Aufnahme immer die gleiche Stellung einnimmt. Anschliessend wird die innere Spannzange 72 zurückgezogen und der Endabschnitt 66 des Pipettenkolbens wird vom Spannorgan 76 erfasst und festgeklemmt (Figur 6b). Nachfolgend wird die äussere Spannzange 71 zurückgezogen und der Endabschnitt 67 des Pipettenkörpers wird vom Spannorgan 74 erfasst und festgeklemmt (Figur 6c). Damit ist die Pipette aufgenommen und das Dosieren kann durchgeführt werden. Nach dem Dosieren wird zuerst die äussere Spannzange 71 durch Vorschieben des Spannorgans gegen die Kraft der Druckfeder geöffnet. Dadurch wird der Endabschnitt 66 des Pipettenkörpers freigegeben. In dieser Stellung wird der Pipettenkörper durch den Pipettenkolben gehalten 4Figur 6d). Danach wird die innere Spannzange 72 durch Verschieben des Spannorgans gegen die Kraft der Druckfeder geöffnet. In dieser Stellung wird nun die ganze Pipette durch den durch die Druckfeder vorgespannten Auswerferstift ausgeworfen. Damit nimmt die Aufnahmeeinrichtung wieder die in Figur 6a dargestellte Stellung ein.

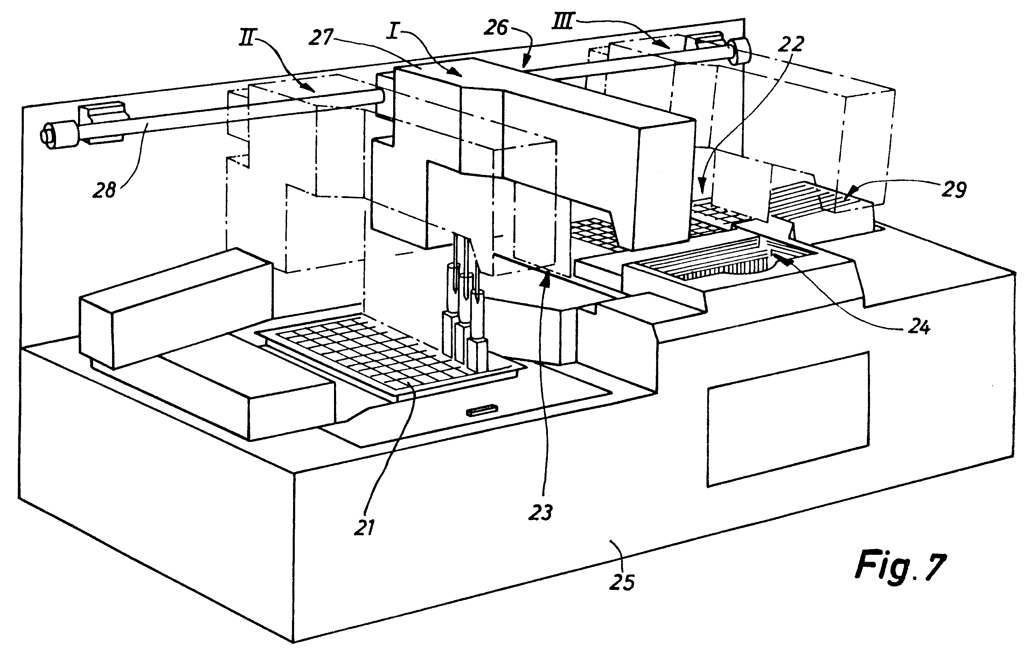

In Figur 7 ist eine Pipettiervorrichtung dargestellt, in der die vorstehend beschriebenen Pipetten und Aufnahmeeinrichtungen verwendet werden, um einen Mehrfachpipettiervorgang durchführen zu können. Die Figur 7 zeigt die Pipettiervorrichtung in drei Stellungen zur Durchführung des Pipettiervorganges und zwar Stellung I, in der die Pipetten aufgenommen bzw. abgestossen werden, Stellung II, in der Flüssigkeit durch die Pipetten aufgenommen wird und Stellung III, in der die Flüssigkeit von den Pipetten abgegeben wird.

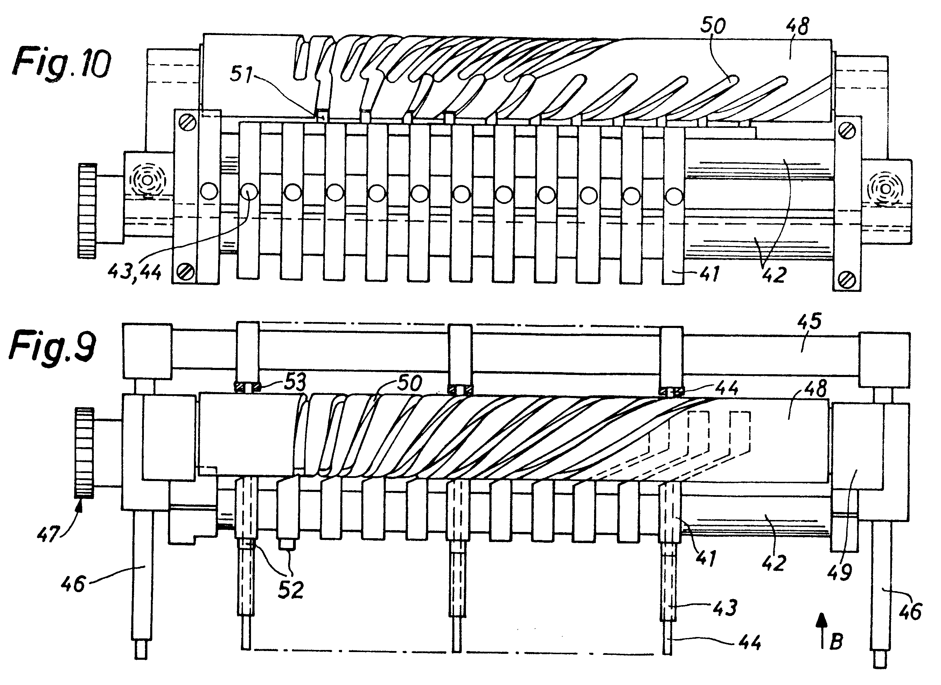

Die Pipettiervorrichtung enthält eine Aufnahmeeinrichtung 21 für die Probenbehälter, einen Aufnahmeabschnitt für eine oder mehrere Micro-Titer- oder Abott-Platten 22, eine Aufnahmeeinrichtung29 für Reagenzienvorratsbehälter, und eine Zuführeinrichtung 23 für die Pipetten und ein Pipettenmagazin 24, die in einem Chassis 25 nebeneinanderliegend und von oben zugänglich angeordnet sind. Die Pipettiervorrichtung enthält ferner eine Dosiereinrichtung 26, die in einem oberhalb des Chassis 25 verfahrbaren Rahmen 27 angeordnet ist. Dieser Rahmen 27 ist an einer Schiene 28 geführt und wird durch eine nicht dargestellte Antriebseinheit entlang dieser Schiene verfahren. Weitere Einzelheiten der Dosiereinrichtung werden mit Bezug auf die Figuren 9 und 10 beschrieben.

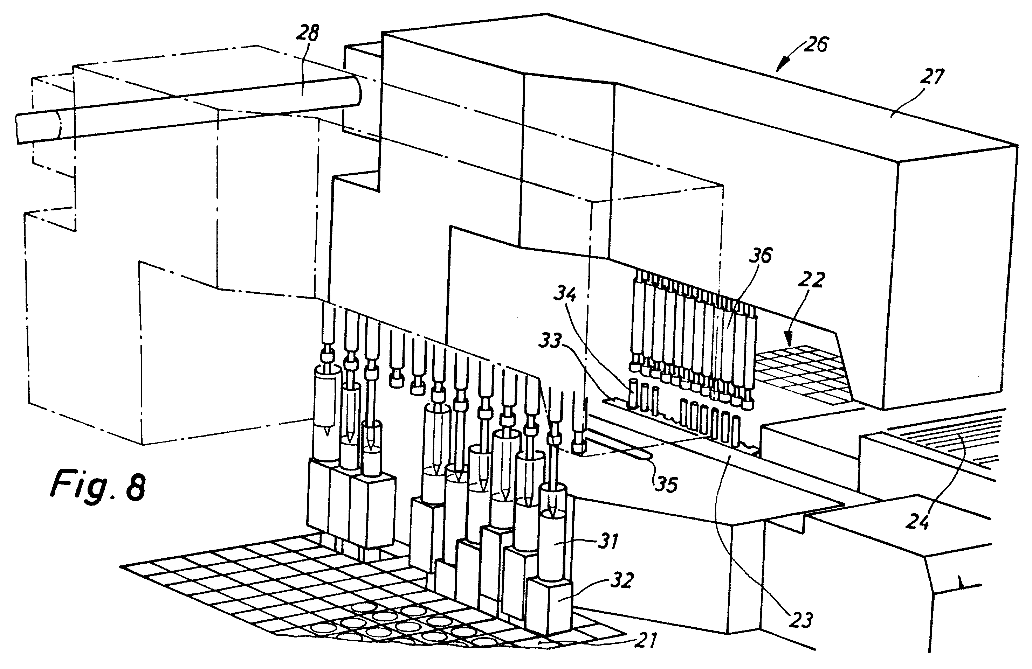

Wie aus der Figur 8, die einen Ausschnitt der Darstellung in Figur 7 zeigt, ersichtlich ist, kann die Aufnahmeeinrichtung 21 eine Mehrzahl von Probebehälter 31 aufnehmen. Bei der hier in Rede stehenden Pipettiervorrichtung sind sechsundneunzig Probenbehälter vorgesehen, die in acht Reihen à zwölf Probenbehälter in die Aufnahmevorrichtung 21 einsetzbar sind. Jeder Probenbehälter 31 ist in einem Halter 32 angeordnet, wobei mit Vorteil eine Spannzange enthalten ist, um mit Vorteil die Probenbehälter lagestabil zu halten, und verschiedene Probebehälter einzusetzen. Die Aufnahmevorrichtung 21 enthält ferner eine nicht dargestellte Antriebseinrichtung, um die Probenbehälter 31 bezüglich der Dosiereinrichtung 26 zu verschieben. Die Antriebseinrichtung enthält zwölf Antriebseinheiten, die in einer Reihe angeordnet und jedem Halter 32 zugeordnet sind, und eine weitere Antriebseinheit, um die zwölf Antriebseinheiten gemeinsam zu verschieben. Die Verschiebung jedes Halters wird durch Fühler, d.h. den elektrisch leitenden Pipettenkolben gesteuert. Die Aufnahmevorrichtung 21 für die Probenbehälter ist so ausgestaltet, dass Probenbehälter mit einem Aussendurchmesser von 10 bis 17 mm und einer Länge von 100 mm einsetzbar sind.

Im Pipettenmagazin 24 werden eine Mehrzahl von Pipetten gelagert. Die Pipetten sind in einem nicht gezeigten Halteorgan enthalten, das eine bis sieben U-förmige Kammern aufweist, in der jeweils 36 Pipetten in einer Reihe liegend aufgenommen werden, wobei die Pipetten mit dem Aufnahmeabschnitt des Pipettenkörpers in diesen Kammern beweglich angeordnet sind. Durch die U-förmige Ausbildung des Halteorgans können die Pipetten in vorteilhafter Weise berührungsfrei in das Pipettenmagazin eingelegt werden.

Die Zufuhrvorrichtung 23 enthält eine Fördereinrichtung, um die Halteorgane mit den Pipetten aus dem Pipettenmagazin 24 zu fördern, eine Verschiebeeinrichtung, die die Pipetten aus dem Halteorgan befördert und eine Abgabeeinrichtung, die die Pipetten aus der Verschiebeeinrichtung übernimmt und zur Aufnahme durch die Aufnahmevorrichtung bereitstellt.

Die Fördereinrichtung umfasst im wesentlichen eine Antriebseinheit und ein durch diese angetriebenes Endlosband, das das Halteorgan mit den Pipetten erfasst. Die Verschiebeeinrichtung enthält eine Antriebseinheit und einen exzentrisch angetriebenen Rechen, der die Pipetten umfasst und jeweils eine Pipette an die Abgabeeinrichtung weitergibt. Die Abgabeeinrichtung hat eine Antriebseinheit und einen Schlitten 33 mit einer Anzahl von Einschnitten, die in einer Reihe liegend ausgebildet sind. Der exzentrisch angetriebene Rechen und die Schlitten 33 sind rechtwinklig zueinander angeordnet, so dass die unmittelbar vor dem Schlitten befindliche Pipette 34 durch den Rechen in einen Einschnitt im Schlitten eingeschoben wird. Die Belegung des Schlittens 33 mit Pipetten wird durch eine Steuervorrichtung gesteuert. Wie aus Figur 8 ersichtlich ist, sind im vorliegenden Fall nur neun von zwölf möglichen Einschnitten belegt. Zwischen der Aufnahmevorrichtung 21 und der Zuführvorrichtung 23 ist eine Reinigungseinrichtung 35 vorgesehen, um die Pipetten nach dem Ansaugen der Flüssigkeit aus den Probenbehältern aussen zu reinigen.

Die Dosiereinrichtung 26 ist mit zwölf Aufnahmeeinrichtungen 36 bestückt.

Die Figuren 9 und 10 zeigen einen Teil der Dosiereinrichtung 26. Neben der Verschiebung der Pipette bzw. des Pipettenkolbens bewirkt die Dosiereinrichtung auch die Einstellung des Abstandes zwischen den benachbarten Pipetten, so dass die Pipetten sicher aus dem Schlitten aufgenommen, einwandfrei in die Probenbehälter 31 eingeführt und exakt auf die einzelnen Vertiefungen der Micro-Titer 22 zentriert werden können.

Die Aufnahmeeinrichtungen 36 sind an der Dosiereinrichtung 26 montiert. Die Dosiereinrichtung hat eine Anzahl von Haltern 41, die durch zwei parallele Stäbe 42 geführt sind. An den Haltern 41 sind rohrförmige Anschlussorgane 43 befestigt, an denen jeweils der erste Greifer 10 (Figur 2) oder die äussere Spannzange 71 (Figur 5a) einer Aufnahmevorrichtung 36 montiert sind. Durch diese rohrförmigen Anschlussorgane 43 und durch die Halter 41 erstrecken sich zweite Anschlussorgane 44, an denen jeweils der zweite Greifer 11 (Figur 2) oder die innere Spannzange 72 (Figur 5b)einer Aufnahmeeinrichtung 36 montiert sind. Die zweiten Anschlussorgane sind an einer Stange 45 befestigt, die an beiden Enden über Zahnstangen 46 mit einer Antriebseinheit 47 in Wirkverbindung stehen. Durch diese Antriebseinheit 47 werden die zweiten Anschlussorgane 44 bezüglich der Halter 41 und der ersten Anschlussorgane 43 verschoben und folglich der zweite Greifer 11 oder die innere Spannzange 72 bezüglich dem ersten Greifer 10 oder der äusseren Spannzange 71 bzw. der Pipettenkolben 2 bezüglich dem Pipettenkörper 1. Ferner sind die äussere und innere Spannzange 71,72 jeweils über ein Isolierorgan 52,53 an dem ersten und zweiten Anschlussorgan 43,44 montiert. Dadurch werden die Pipetten gegenüber der Pipettiervorrichtung elektrisch isoliert. Um die Pipette bzw. den Pipettenkörper 1 bezüglich dem Chassis 25 zu verschieben, ist eine weitere Antriebseinheit (nicht dargestellt) vorgesehen, die die Dosiereinrichtung 26 als Ganzes verschiebt.

Um den Abstand zwischen den Pipetten einzustellen, ist eine Walze 48 vorgesehen, die an beiden Enden in Lagern 49 gelagert ist. Die Walze 48 enthält eine Anzahl von wendelförmig ausgebildeten Nuten 50, die am Umfang der Walze ausgebildet sind. Die Anfangs- und Endpunkte der wendelförmigen Nuten 50 liegen auf einer Linie, die parallel zur Mittellinie der Walze verläuft. Die Nuten 50 haben eine unterschiedliche Steigung. Die Walze 48 wird durch eine nicht dargestellte Antriebseinheit angetrieben. Die Halter 41 sind mit Ansätzen 51 versehen, die in die Nuten 50 hineinragen. Somit werden die Halter 41 durch Drehen der Walze 48 verschoben. Die Nuten 50 sind so ausgebildet, dass sich die Abstände zwischen den Haltern 41 und folglich den Pipetten gleichmässig ändern.

Nachfolgend wird ein durch die vorstehend beschriebene Pipettiervorrichtung durchführbarer Pipettiervorgang beschrieben.

Durch die Dosiereinrichtung 26 werden die in den Schlitten 33 angeordneten Pipetten 34 mittels der Aufnahmeeinrichtung 36 aufgenommen. Die Anzahl und die Anordnung der Pipetten ist in der Steuervorrichtung programmiert. Die Dosiereinrichtung befördert die Pipetten zur Aufnahmeeinrichtung 21 der Probebehälter 31. Die Probebehälter 31 werden in Richtung der Dosiereinrichtung 26 verschoben, bis die Pipettenkolbenspitze 8,65 (Fig. 1,3) mit der Flüssigkeit in Kontakt kommt. Befinden sich die Flüssigkeitsspiegel in den Probebehältern 31 auf der gleichen Höhe, wird durch die Pipetten die Flüssigkeit angesaugt. Danach werden die Pipetten 36 zur Aufnahme von Reagenzien verfahren, wobei gleichzeitig der Abstand der Pipetten auf die Micro-Titerplatte angepasst wird und eine Aussenreinigung der Pipetten 34 in der Reinigungseinrichtung 35 vorgenommen wird. In der Folge werden die von den Pipetten angesaugten Flüssigkeiten z.B. in die Micro-Titerplatten abgegeben. Abschliessend werden die Pipetten 34 durch die Dosiereinrichtung 26 aud den Aufnahmeeinrichtungen 36 in einen Abfallbehälter (nicht dargestellt) abgestossen.

Neben dem vorstehenden Pipettiervorgang sind auch andere Pipettiervorgänge durchführbar.

**Patentansprüche**

1.    Pipette mit einem Pipettenkörper, der als länglicher Hohlkörper mit einem die Ansaugspitze bildenden Endabschnitt und einem einen Aufnahmeabschnitt bildenden Endabschnitt ausgebildet ist, und einem Pipettenkolben, der als stabförmiger Körper mit einem eine Ansaugspitze bildenden Endabschnitt und einem einen Aufnahmeabschnitt bildenden anderm Endabschnitt ausgebildet ist, dadurch gekennzeichnet, dass der Körper (1, 61) und der Kolben (2, 62) mit ihren die Ansaugspitze bildenden Endabschnitten (3, 4; 63,64) eine totvolumenfreie Einheit bilden und ein Abschnitt (8; 65) des die Ansaugspitze bildenden Endabschnittes (3; 63) des Kolbens (2; 62) in einer Endstellung aus dem die Ansaugspitze bildenden Endabschnitt (3; 63) des Körpers (1; 61) hervorsteht, der Körper einen ringförmigen Abschnitt (5; 66), der am Aufnahmeabschnitt ausgebildet ist, und der Kolben einen im wesentlichen zylindrischen Abschnitt (6; 67) aufweist, der am Aufnahmeabschnitt ausgebildet ist, um den Pipettenkörper und den Pipettenkolben in einer Aufnahmeeinrichtung aufzunehmen, und dass der Körper (1; 61) und der Kolben (2; 62) aus Kunststoff bestehen, wobei entweder der Körper oder der Kolben elektrisch leitend ist.

2. Pipette nach Anspruch 1, dadurch gekennzeichnet, dass der Körper (1; 61) und der Kolben (2; 62) elektrisch leitend sind.

3. Pipette nach Anspruch 1, dadurch gekennzeichnet, dass der Kolben (2) eine ringförmige Wulst (6) aufweist, die am Aufnahmeabschnitt ausgebildet ist, um den Pipettenkolben in einer Aufnahmeeinrichtung aufzunehmen.

4. Pipette nach Anspruch 1, dadurch gekennzeichnet, dass der die Ansaugspitze bildende Endabschnitt (63) des Körpers (61) eine geringere Wandstärke als der daran angrenzende Abschnitt aufweist, um im Uebergangsbereich zwischen Ansaugspitze und Hohlkörper innerhalb des Körpers (61) eine ringförmige Erweiterung (69) zu schaffen, und dass am Kolben (62) angrenzend, an den die Ansaugspitze bildenden Endabschnitt (64) eine flanschartige Dichtungslippe (70) ausgebildet ist, die innerhalb der Erweiterung (69) im Körper (61) liegt, wenn der Kolben (62) die vorderste Stellung im Körper (61) einnimmt und den Kolben im Körper hält.

5. Aufnahmeeinrichtung mit Pipette nach Anspruch 1, gekennzeichnet durch eine erste Anordnung (10,71) zum Aufnehmen des Pipettenkörpers (1,61) und eine zweite Anordnung (11,72) zum Aufnehmen des Pipettenkolbens (2,62), die einzeln oder gemeinsam verschiebbar sind, wobei die erste und/oder zweite Anordnung elektrisch leitend ist.

6. Einrichtung nach Anspruch 5, dadurch gekennzeichnet, dass die erste und/oder zweite Anordnung gegen ein elektrisches Bezugspotential isoliert sind.

7. Einrichtung nach Anspruch 5, dadurch gekennzeichnet, dass die erste Anordnung ein rohrförmig ausgebildeter Greifer (10) ist und dass die zweite Anordnung ein stabförmiger Greifer (11) ist, der im rohrförmigen Greifer (10) verschiebbar angeordnet ist.

8. Einrichtung nach Anspruch 7, dadurch gekennzeichnet, dass der erste Greifer (10) einen Halteabschnitt (12) für den Pipettenkörper (1) aufweist, dass der zweite Greifer (11) einen Halteabschnitt (14) für den Pipettenkolben (2) aufweist, und dass eine Spreizhülse (16) im ersten Greifer (10) angeordnet ist, um den Halteabschnitt des zweiten Greifers (11) zu öffnen.

9. Einrichtung nach Anspruch 5, dadurch gekennzeichnet, dass die erste und zweite Anordnung (71,72) als äussere und innere Spannzangen mit einer Spannhülse (73, 75) und einem Spannorgan (74, 76) ausgebildet sind, um den Pipettenkörper und Pipettenkolben (61,62) aufzunehmen, dass die innere Spannzange (72) in der äusseren Spannzange (71) verschiebbar angeordnet ist, und dass Mittel (88,90) vorgesehen sind, die bei geöffneten Spannzangen (71, 72) an den Pipettenkolben (62) anlegbar sind, um beim Aufnehmen der Pipette den Pipettenkörper (61) gegen einen Anschlag und den Pipettenkolben (62) in die vorderste Stellung zu drücken und beim Auswerfen der Pipette den Pipettenkolben (62) zusammen mit dem Pipettenkörper (61) auf die Aufnahmeeinrichtung zu stossen.

10. Einrichtung nach Anspruch 9, dadurch gekennzeichnet, dass die Auswerfereinrichtung einen Auswerferstift (88), der innerhalb der inneren Spannzange (72) verschiebbar angeordnet ist, und eine Druckfeder (90) aufweist, um den Auswerferstift (88) zur Aufnahmeseite der inneren Spannzange (72) hin vorzuspannen.

11. Pipettenvorrichtung mit einer Anzahl von Aufnahmeeinrichtungen nach Anspruch 5, dadurch gekennzeichnet, dass eine erste Einrichtung (21) zur Aufnahme von einer Mehrzahl von Probenbehältern (31), eine zweite Einrichtung (22) zur Aufnahme von mindestens einer Anordnung (22) mit Gefässen, welche in einem geometrisch regelmässigen Muster angeordnet sind, und eine dritte Einrichtung (23) zum Zuführen von Pipetten auf einem Pipettenmagazin (24) in einem Chassis (25) hintereinanderliegend und von oben zugänglich angeordnet sind und dass eine vierte Einrichtung (26), die mit den Aufnahmeeinrichtungen (36) versehen ist, oberhalb des Chassis (25) verfahrbar angeordnet ist, um Pipetten (34) in der Zuführvorrichtung (23) durch die Aufnahmeeinrichtungen aufzunehmen, die Flüssigkeit aus dem Probenbehälter (31) anzusaugen, die angesaugte Flüssigkeit aus den Pipetten an die Anordnung (22) abzugeben und die Pipetten (34) dann abzustossen.

12. Vorrichtung nach Anspruch 11, dadurch gekennzeichnet, dass die erste Einrichtung (21) eine Steuereinheit aufweist, die an den Pipetten ausgebildete Fühler umfassen, um die Flüssigkeitsniveau in den Probenbehältern (31) individuell auf die gleiche Höhe bezüglich der vierten Einrichtung (26) einzustellen.

13. Vorrichtung nach Anspruch 12 , dadurch gekennzeichnet, dass die erste Einrichtung (21) Halter (32) für die Probenbehälter (31) und eine Antriebseinrichtung aufweist, die mit der Steuereinheit verbunden und mit den Haltern in Wirkverbindung bringbar ist, um die Probenbehälter (31) individuell bezüglich der vierten Einrichtung (26) zu verschieben.

14. Vorrichtung nach Anspruch 11, dadurch gekennzeichnet, dass eine Anzahl von Pipetten in einem Halteorgan angeordnet sind und dass die Zuführvorrichtung (23) eine Fördereinrichtung, um die Halteorgane mit den Pipetten aus dem Pipettenmagazin zu fördern, eine Verschiebeeinrichtung, um die Pipetten aus dem Halteorgan auszustossen, und eine Abgabeeinrichtung (33) aufweist, um die Pipetten zur Aufnahme durch die Aufnahmeeinrichtungen bereitzustellen.

15. Vorrichtung nach Anspruch 13, dadurch gekennzeichnet, dass die Verschiebeeinrichtung und die Abgabeeinrichtung (33) jeweils eine Antriebseinrichtung enthält, die so steuerbar sind, dass die Verschiebeeinrichtung selektiv Pipetten an die Abgabeeinrichtung abgibt.

16. Vorrichtung nach Anspruch 11, dadurch gekennzeichnet, dass die vierte Einrichtung (26) in einem einseitig geführten Gehäuse (27) angeordnet ist, welches Gehäuse (27) eine Antriebseinheit aufweist, um die vierte Einrichtung (26) zu verfahren.

17. Vorrichtung nach Anspruch 11, dadurch gekennzeichnet, dass die vierte Einrichtung (26) für jede Aufnahmeeinrichtung einen Halter (41), die in einer Reihe nebeneinanderliegend angeordnet sind, und eine Einstelleinrichtung (48) aufweist, die mit den Haltern (41) in Eingriff steht, um den Abstand zwischen den Haltern proportional zu verstellen.

18. Vorrichtung nach Anspruch 17, dadurch gekennzeichnet, dass die Einstelleinrichtung eine Walze (48), die mit einer Anzahl von Nuten (50) versehen ist und eine Antriebseinheit für die Walze (18) aufweist, dass die Nuten (50) wendelförmig ausgebildet sind, unterschiedliche Steigungen aufweisen und die Nutenanfangspunkte und -endpunkte auf einer Linie liegen, die parallel zur Mittellinie der Walze verläuft und dass die Halter (41) Ansätze (51) aufweisen, die in die Nuten (50) eingreifen.

19. Vorrichtung nach Anspruch 16, dadurch gekennzeichnet, dass jeder Halter (41) ein erstes Anschlussorgan (43) zum Befestigen der ersten Anordnung (10,71)einer Aufnahmeeinrichtung aufweist und dass die vierte Einrichtung (26) eine Verstelleinrichtung (44,45) aufweist, die zweite Anschlussorgane (44) zum Befestigen der zweiten Anordnung (11,72)der Aufnahmeeinrichtung und eine Antriebseinheit enthält, um die zweiten Anschlussorgane (44) bezüglich der ersten Anschlussorgane (43) zu verschieben.

20. Vorrichtung nach Anspruch 19, dadurch gekennzeichnet, dass ein erstes und zweites Isolierorgan (52,53) zwischen dem ersten bzw. zweiten Anschlussorgan (43,44) und der ersten bzw. zweiten Anordnung (71,72) der Aufnahmeeinrichtung angeordnet ist, um die Aufnahmeeinrichtung gegenüber dem Halter (48) elektrisch zu isolieren.

## Claims

1. Pipette having a pipette body constructed as an elongated hollow body with an end section forming the suction tip and an end section forming the pick-up section and having a pipette piston constructed as a rod-like body with an end section forming the suction tip and an end section forming the pick-up tip characerized in that the end sections (3,4;63,64) of the body (1,61) and the piston (2,62) forming the suction tip form an unit without clearance volume and a portion (3,63) of the piston's (2,62) end section forming the suction tip extending outwardly from bodies (1,61) and section (3,63) forming the suction tip, said body has an annular section (5;66) provided on the pick-up section and said piston has a generally cylindrical portion (6;67) provided on the pick-up section, in order to hold the pipette body and pipette piston within a pick-up device and that the body (1;61) and the piston (2;62) consist of plastic, wherein either the body or the piston are electrically conductive.

2. Pipette according to claim 1, characterized in that the body (1;61) and the piston (2;62) are electrically conductive.

3. Pipette according to claim 1, characterized in that the piston (2) has an annular bead (6) provided on the pick-up section, in order to hold the pipette piston within a pick-up device.

4. Pipette according to claim 1, characterized in that bodies (61) end section (63) forming the suction tip has a lower wall thickness than the portion adjacent thereto, in order to form an annular extension (69) in the transition area between suction tip and hollow body and that a flange like sealing lip (70) is formed adjacent the end section (64) forming the suction tip which sealing lip is positioned within the extension (69) in the body (61) when the piston take in the foremost position within the body (61) and holds the piston within the body.

5. Pick-up device having a pipette according to claim 1, characterized by a first assembly (10;71) for receiving of the pipette body (1;61) and a second assembly (11,72) for receiving of the pipette piston (2,62) which are individually or commonly movable, wherein the first and/or the second assembly are electrically conductive.

6. Device according to claim 5 characterized in that first and/or second assemblies are insulated against an electrical reference potential.

7. Device according to claim 5, characterized in that the first assembly is a tubular grab (10) and that the second assembly is a rod-like grab (11) moveably disposed within the tubular grab.

8. Device according to claim 7, characterized in that the first grab (10) includes a support section (12) for the pipette body (1), that the second grab (11) includes a support section (14) for the pipette piston (2) and that an expanding sleeve (16) is situated within the first grab (10), to open the support section of the second grab (11).

9. Device according to claim 5 characterized in that the first and second assembly (71,72) are constructed as outer and inner collets having an adapter sleeve (73,75) and a gripping element (74,76) to receive the pipette body and the pipette piston, that the inner collet (72) is moveably disposed within the outer collet (71) and that means (88,90) are provided which means are applicable to the pipette piston (62) when collets (71,72) are opened, in order to press the pipette body (61) against a stop and the pipette piston (62) in the foremost position when pick-up of the pipette and in order to push the pipette piston (62) together with the pipette body (61) on the pick-up device when ejecting the pipette.

10. Device according to claim 9, characterized in that the ejection device includes an ejection (88) moveably disposed within the inner collet (72) and a compression spring (90) to prestress the ejector (88) to pick-up side of the inner collet (72).

11. Pipetting apparatus having a number of pick-up devices according to claim 5, characterized in that a first device (21) for receiving of a plurality of test containers (31), a second device for receiving of at least one array (22) having vessels, which are arranged in a geometrically regular pattern, and a third device (23) for feeding of pipettes to a pipette hoper being arranged adjacent each other and accessible from above and that a fourth device (26) provided with said pick-up devices (36) is moveably disposed above of the chassis (25), to pick up pipettes (34) in the feeding device (23) by the pick-up devices to absorb liquid from said test containers (31); to discharge the absorbed liquid from pipettes on the array (22) and then to eject the pipettes (34).

12. Apparatus according to claim 11, characterized in that the first device (21) has a control unit including detectors formed on pipettes to individually adjust the liquid level in test containers to the same high regarding the fourth device (26).

13. Apparatus according to claim 12, characterized in that the first device (21) has supports (32) for test containers and a drive device connected to the control unit, to individually move test containers regarding to the fourth device (26).

14. Apparatus according to claim 11, characterized in that a number of pipettes are arranged in a holding member and that the feeding device (23) includes a conveyor to transport holding members with pipettes from the pipette hopper, a displacement device to eject pipettes from the holding member and a discharge device (33) to prepare pipettes for receiving by the pick-up devices.

15. Apparatus according to claim 13, characterized in that the displacement device and discharge device (33) respectively includes a drive controllable such that the displacement device selectively discharges pipettes to the discharge device.

16. Apparatus according to claim 11, characterized in that the fourth device (26) is situated within a unidirectional guided housing (27) which housing (27) includes a drive unit to move the fourth device (26).

17. Apparatus according to claim 11, characterized in that the fourth device (26) has one support (41) for each pick-up device, which support are arranged side by side in a row and a adjusting device (48) which are in engagement with the supports (41) in order to proportionally adjust the distance between supports.

18. Apparatus according to claim 17, characterized in that the adjusting device has a roller (48) provided with a number of grooves (50) and a drive unit for the roller (8), that grooves (50) being formed helically having different inclinations and initial and terminal points of grooves are in a line that extends parallel with the main axis of the roller and that supports (41) have attachments that mesh in grooves (50).

19. Apparatus according to claim 16, characterized in that each support (41) has a first connecting member (43) for fastening the first assembly (10;71) of a pick-up device and that the fourth device (26) includes an adjusting device (44,45) that has second connecting members (44) for fastening of the second assembly (11;72) of the pick-up device and a drive unit, to move second connecting members (44) regarding first connecting members (43).

20. Apparatus according to claim 19, characterized in that a first and second isolating member (52,53) are disposed between the first connecting member and second connecting member (43,44) respectively and the first assembly and the second assembly (71,72) respectively of the pick-up device to electrically insulate the pick-up device with respect to the support (48).

**Revendications**

1. Pipette avec un corps de pipette qui est réalisé sous la forme d'un corps creux allongé avec une section d'extrémité formant une pointe d'aspiration et une section d'extrémité formant une section de reprise, et avec un piston de pipette qui est réalisé sous la forme d'un corps en forme de barreau avec une section d'extrémité formant une pointe d'aspiration et une section d'extrémité formant une section de reprise, **caractérisée en ce que** les sections d'extrémité (3, 4; 63, 64) formant la pointe d'aspiration du corps (1, 61) et du piston (2, 62) forment une unité dépourvue de volume mort, et une section (8; 65) de la section d'extrémité (3, 63) du piston, formant la pointe d'aspiration, déborde dans une position extrême hors de la section d'extrémité (3, 63) du corps (1, 61) formant la pointe d'aspiration, le corps présente une section de forme annulaire (5; 66) qui est réalisée dans la section de reprise, et le piston présente une section (6; 67) en substance cylindrique qui est formée dans la section de reprise, pour reprendre le corps de pipette et le piston de pipette dans un dispositif de reprise, et **en ce que** le corps (1, 61) et le piston (2, 62) sont constitués d'un matériau synthétique, soit le corps soit le piston étant électriquement conducteur.

2. Pipette selon la revendication 1, **caractérisée en ce que** le corps (1, 61) et le piston (2, 62) sont électriquement conducteurs.

3. Pipette selon la revendication 1, **caractérisée en ce que** le piston (2) présente un renflement annulaire (6) qui est formé dans la section de reprise afin de reprendre le piston de pipette dans un dispositif de reprise.

4. Pipette selon la revendication 1, **caractérisée en ce que** la section d'extrémité (63) formant la pointe d'aspiration du corps (61) présente une épaisseur de paroi plus faible que celle de la section adjacente, afin de former au voisinage du passage entre la pointe d'aspiration et le corps creux à l'intérieur du corps (61) un élargissement de forme annulaire, et **en ce que** dans la section d'extrémité (64) formant la pointe d'aspiration et adjacente au piston est formée une lèvre d'étanchéité (70) ressemblant à une bride, qui se trouve à l'intérieur de l'élargissement (69) du corps (61) lorsque le piston (62) prend dans le corps (61) la position la plus en avant et que le piston est tenu dans le corps.

5. Dispositif de reprise avec pipette selon la revendication 1, **caractérisé par** un premier agencement (10, 71) de reprise du corps de pipette (1, 61) et un second agencement (11, 72) de reprise du piston de pipette (2, 62), qui sont déplaçables individuellement ou ensemble, le premier et/ou le second agencement étant électriquement conducteurs.

6. Dispositif selon la revendication 5, **caractérisé en ce que** le premier et/ou le second agencement sont isolés par rapport à un potentiel électrique de référence.

7. Dispositif selon la revendication 5, **caractérisé**

**en ce que** le premier agencement est une pince (10) réalisée en forme de tube et **en ce que** le second agencement est une pince (11) en forme de barre qui est disposée à déplacement dans la pince (10) en forme de tube.

8. Dispositif selon la revendication 7, **caractérisé en ce que** la première pince (10) présente une section de retenue (12) du corps de pipette (1), **en ce que** la seconde pince (11) présente une section de retenue (14) du piston de pipette (2) et **en ce que** dans la première pince (10) est disposée un manchon expansible (16), afin d'ouvrir la section de retenue de la seconde pince (11).

9. Dispositif selon la revendication 5, **caractérisé en ce que** les premier et second agencements (71, 72) sont réalisés sous la forme de pinces extérieure et intérieure de serrage avec un manchon de serrage (73, 75) et un organe de serrage (74, 76), pour reprendre le corps de pipette et le piston de pipette (61, 62), **en ce que** la pince de serrage intérieure (72) et la pince de serrage extérieure (71) sont déplaçables, et **en ce que** des moyens (88, 90) sont prévus qui, lorsque les pinces de serrage (71, 72) sont ouvertes, peuvent être placés contre le piston de pipette (62), pour lorsque la pipette est reprise repousser le corps de pipette (61) contre une butée et repousser le piston de pipette (62) dans la position la plus en avant, et pour lorsque la pipette est éjectée repousser le piston de pipette (62) avec le corps de pipette (61) contre le dispositif de reprise.

10. Dispositif selon la revendication 9, **caractérisé en ce que** le dispositif d'éjection présente une tige d'éjection (88) qui est disposée à déplacement dans la pince intérieure de serrage (72), et un ressort de compression (90), pour précontraindre la tige d'éjection (88) en direction du côté de reprise de la pince de serrage (72).

11. Dispositif à pipettes avec plusieurs dispositifs de reprise selon la revendication 5, **caractérisé en ce qu'**un premier dispositif (21) de reprise de plusieurs récipients d'essai (31), un second dispositif (22) de reprise d'au moins un agencement (32) à réservoirs, qui sont disposés suivant un schéma géométriquement régulier, et un troisième dispositif (23) pour amener des pipettes à reposer les unes derrière les autres et accessibles par le haut dans un châssis (25) sur un magasin à pipettes, et **en ce qu'**un quatrième dispositif (26), qui est munie des dispositifs de reprise (36), est disposée de manière à pouvoir être transportée au-dessus du châssis (25), pour faire reprendre par les dispositifs de reprise les pipettes (34) placées dans le dispositif d'amenée (23), aspirer le liquide hors du récipient d'essai, transférer à l'agencement (22) le liquide aspiré hors des pipettes et éjecter ensuite les pipettes (34).

12. Dispositif selon la revendication 11, **caractérisé en ce que** le premier dispositif (21) présente une unité de commande qui englobe des sondes formées sur les pipettes, afin de régler individuellement le niveau de liquide dans les récipients d'essai (31) à la même hauteur par rapport au quatrième dispositif (26).

13. Dispositif selon la revendication 12, **caractérisé en ce que** le premier dispositif (21) présente des consoles (32) pour les récipients d'essai (31) et un dispositif d'entraînement qui est relié à l'unité de commande et peut être mis à coopérer avec les consoles pour déplacer individuellement les récipients d'essai (31) par rapport au quatrième dispositif (26).

14. Dispositif selon la revendication 11, **caractérisé en ce que** plusieurs pipettes sont disposées dans un organe de retenue et que le dispositif (23) d'amenée est un dispositif de transport pour transporter hors du magasin à pipettes le organes de retenue avec les pipettes, et présente un dispositif de distribution (33) pour préparer les pipettes à la reprise par les dispositifs de reprise.

15. Dispositif selon la revendication 13, **caractérisé en ce que** le dispositif de déplacement et le dispositif de distribution (33) contiennent chacun un dispositif d'entraînement qui peuvent être commandés de telle sorte que le dispositif de déplacement transmet sélectivement les pipettes au dispositif de distribution.

16. Dispositif selon la revendication 11, **caractérisé en ce que** le quatrième dispositif (26) est disposé dans un boîtier (27) guidé d'un côté, ce boîtier (27) présentant une unité d'entraînement pour mettre en déplacement le quatrième dispositif (26).

17. Dispositif selon la revendication 11, **caractérisé en ce que** le quatrième dispositif (26) présente pour chaque dispositif de reprise une console (41). ces consoles étant disposées en rangée les unes derrière les autres, et un dispositif de réglage (48) qui accroche les consoles (41) pour modifier proportionnellement l'écartement entre les consoles.

18. Dispositif selon la revendication 17, **caractérisé en ce que** le dispositif de réglage présente un rouleau (48) qui est doté d'une série de rainures (50), et une unité d'entraînement du rouleau (48), **en ce que** les rainures sont réalisées de forme ondulée, présentent des pentes différentes, et les points de début et de fin des rainures sont alignés sur une ligne s'étendant parallèlement à la ligne médiane du rouleau, et **en ce que** les consoles (41) présentent des saillies (51) qui s'insèrent dans les rainures (50).

19. Dispositif selon la revendication 16, **caractérisé en ce que** chaque console (41) présente un premier organe de raccordement (43) afin de fixer le premier agencement (10, 71) d'un dispositif de reprise et **en ce que** le quatrième dispositif (26) présente un dispositif de réglage (44, 45), contient le second organe de raccordement (44) pour la fixation du second agencement (11, 72) du dispositif de reprise et une unité d'entraînement, pour déplacer le second organe de raccordement (44) par rapport au premier organe de raccordement (43).

20. Dispositif selon la revendication 19, **caractérisé en ce qu'**un premier et un second organe d'isolement (52,53) sont disposés entre le premier ou le second organe de raccordement (43,44) et le premier ou le second agencement (71,72) du dispositif de reprise, pour isoler électriquement les dispositif de reprise vis-à-vis de la console (48).

*Fig.1*

# Fig. 2a

# Fig. 2b

# Fig. 2c

# Fig. 2d

Fig.5b   Fig.5a

Fig. 3

Fig.4

Fig.6a

Fig.6b

83

A

73 75

74 76

70 71

88

67

66

76

67

Fig.6c

Fig.6d

Fig. 7

EP 0 226 867 B1

Fig. 8

Fig.10

Fig.9